# EUROPEAN PATENT APPLICATION

(11) **EP 1 149 716 A2**
(43) Date of publication of application: **31.10.2001**
(21) Application number: 01110441.1
(22) Date of filing: 27.04.2001
(51) Int. Cl.: B60G 21/06

(54) **Suspension system for four-wheeled vehicles**

(30) Priority: 27.04.2000 JP 2000127183
(71) Applicant: YAMAHA HATSUDOKI KABUSHIKI KAISHA, Iwata-shi Shizuoka-ken (JP)
(72) Inventor: Sawai, Seiji, Iwata-Shi, Shizuoka-ken (JP)
(74) Representative: Grünecker, Kinkeldey, Stockmair & Schwanhäusser Anwaltssozietät

(57) **Abstract**

Vehicle suspension device for four-wheeled vehicles with at least four hydraulic dampers (32,33,34,35) one provided for each wheel, said hydraulic dampers are in communication with each other in paired relation by a first and second pressure regulating device (40,41) having a high pressure gas chamber means (71,73,97), respectively, wherein the high pressure gas chamber means (71,97) of the first pressure regulating device (40) is in communication with the high pressure gas chamber means (73,97) of the second pressure regulating device (41).

## Description

This invention relates to a vehicle suspension device for four-wheeled vehicles, especially for automobiles or the like.

This kind of conventional suspension system for four-wheeled vehicles has been disclosed, for example, in Laid-open Japanese Patent Application Hei 8-132846, which system will be described in reference to Fig. 7.

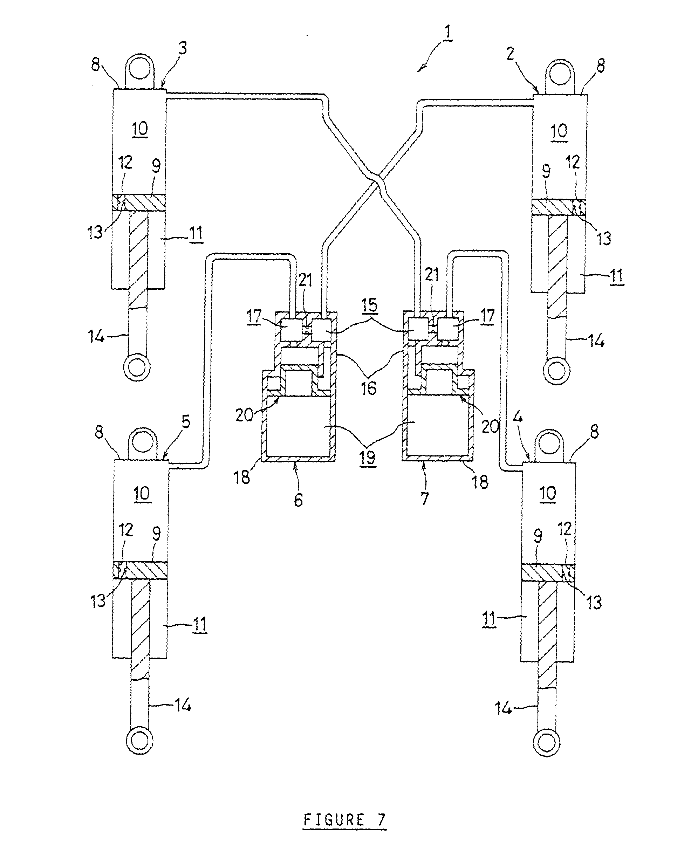

Fig. 7 is a sectional view showing the structure of a conventional suspension system or device for four-wheeled vehicles. The suspension system for four-wheeled vehicles 1 shown in Fig. 7, which is mounted to an automobile, comprises an oil cylinder 2 for the right front wheel, an oil cylinder 3 for the left front wheel, an oil cylinder 4 for the right rear wheel, an oil cylinder 5 for the left rear wheel, a first pressure regulating device 6 connected to the oil cylinders 2, 5, of these oil cylinders 2-5, provided in paired relation to the vehicle body, and a second pressure regulation device 7 connected to the other two oil cylinders 3, 4.

The four oil cylinders 2-5 have the identical construction, and the interior of a cylinder body 8 filled with working oil is defined by a piston 9 into an upper oil chamber 10 and a lower oil chamber 11. The piston 9 is formed with a communication passage 12 for providing communication between the upper and the lower oil chambers 10, 11. A restrictor or throttle 13 is provided in the communication passage 12.

These oil cylinders 2-5 are interposed between the vehicle body and wheels, with cylinder bodies 8 being connected to the vehicle body (not shown) and with piston rods 14 pivot-mounted at the lower ends to members, such as wheel suspension links (not shown), moving with wheels up and down relative to the vehicle body.

The first pressure regulating device 6 and the second pressure regulating device 7 are formed into the identical construction. They each take the construction of two cylinders combined; a first pressure regulating cylinder 16 having a first oil chamber 15 connected to the upper oil chamber 10 of the oil cylinder 2 or 3 for a front wheel and a second pressure regulating cylinder 18 having a second oil chamber 17 connected to the upper oil chamber 10 of the oil cylinder 4 or 5 for a rear wheel, are formed integrally; and the two oil chambers 15, 17 and a high pressure gas chamber 19 are defined by one free piston 20. A restrictor or throttle 21 is provided between the first and the second oil chambers 15, 17.

In the first pressure regulating device 6, the first oil chamber 15 is connected to the upper oil chamber 10 of the oil cylinder 2 for the right front wheel, and the second oil chamber 17 is connected to the upper oil chamber 10 of the oil cylinder 5 for the left rear wheel. In the second pressure regulating device 7, the first oil chamber 15 is connected to the upper oil chamber 10 of the oil cylinder 3 for the left front wheel, and the second oil chamber 17 is connected to the upper oil chamber 10 of the oil cylinder 4 for the right rear wheel. That is, the upper oil chambers 10 of the oil cylinders 2, 5 provided in paired relation to the vehicle body are in communication with each other through the first pressure regulating device 6, and the upper oil chambers 10 of the oil cylinders 3, 4 are in communication with each other through the second pressure regulating device 7.

The free pistons 20 of the first and the second pressure regulating devices 6, 7 are formed such that the effective cross sectional area of the first oil chamber 15 is equal to that of the second oil chamber 17, and they are biased in the direction of the volumes of the two oil chambers 15, 17 being decreased, by pressure of high pressure gas filled in the high pressure gas chamber 19. The reason for the free pistons 20 being thus biased by pressure of high pressure gas is to prevent cavitation due to excessive negative pressure of the hydraulic system.

In the conventional suspension system 1 for four-wheeled vehicles described above, damping force becomes larger when the two oil cylinders connected respectively to the first and the second pressure regulating devices 6, 7 are operated in the different directions to each other, and damping force becomes smaller when the two oil cylinders are operated in the same direction. For example, if the oil cylinders 3, 5 on the left side of the vehicle body are operated and the oil cylinders 2, 4 on the right side of the vehicle body are extended during right turn and rolling of the vehicle, working oil passes through the restrictors 13 of cylinders and restrictors 21 of the first and the second pressure regulating devices 6, 7 to thereby cause a larger damping force. This phenomena will occur similarly during pitching, that is, when the oil cylinder 2 for the right front wheel and the oil cylinder 3 for the left front wheel are operated in the same direction, and the oil cylinder 4 for the right rear wheel and the oil cylinder 5 for the left rear wheel are operated in the direction opposite to the two oil cylinders 2, 3 for front wheel 5.

On the other hand, if four oil cylinders 2-5 are operated in the same direction, for example, during bouncing, damping force is decreased compared with that during rolling or pitching because of reduction of the amount of working oil passing through restrictors 21 of the first and second pressure regulating devices 6, 7.

However, in the suspension system for four-wheeled vehicles as described above, when a pair of two oil cylinders of four oil cylinders 2-5 and the other two oil cylinders are operated in the opposite directions, that is, when the free pistons 20 of the two pressure regulating devices 6, 7 are moved in the opposite direction to each other, the operation of the oil cylinders becomes unnatural, which gives the driver an uncomfortable feeling.

This is because spring force caused by high pressure gas in the regulating devices is exerted on the two oil cylinders on the compression stroke. That is, the foregoing spring force is transmitted to the two oil cylinders through the hydraulic system from the pressure regulating device whose high pressure gas chamber 19 is compressed by the free piston 20 in Fig. 7, and resistance is increased when the two oil chambers are compressed. The spring force increases remarkably with increased displacement (amount of compression of the high pressure gas chamber 19) of the free piston 20, for a smaller volume of the high pressure gas chamber 19 after compression. Therefore, the foregoing phenomena can be seen clearly when the volume of the high pressure gas chamber 19 is not sufficient relative to the displacement of the cylinders 2-5 because of the demand for size reduction of the pressure regulating device.

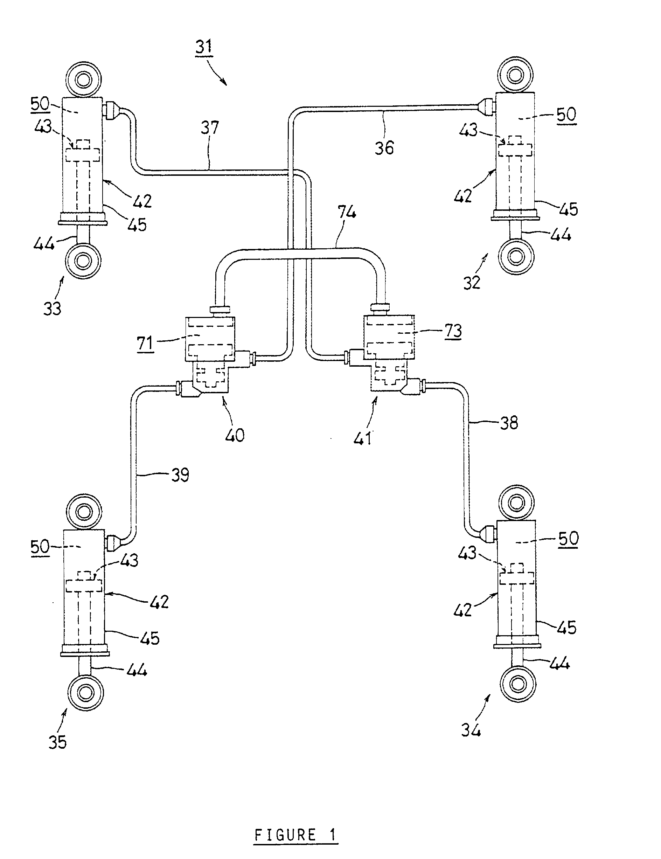

For example, when a running form is taken in which the oil cylinder 2 for the right front wheel and the oil cylinder 5 for the left rear wheel are extended and the oil cylinder 3 for the left front wheel and the oil cylinder 4 for the right rear wheel are compressed (running form of the front and the rear wheels moving in twisted relation when viewed from the front of the vehicle body), the free piston 20 of the first pressure regulating device 6 ascends in Fig. 1 with increased volume of the high pressure gas chamber 19, and the free piston 20 of the second pressure regulating device 7 descends with decreased volume of the high pressure gas chamber 19. In this case, although damping force is hardly produced in both of the pressure regulating devices 6, 7, spring force caused by high pressure gas is exerted on the oil cylinder 3 for the left front wheel and the oil cylinder 4 for the right rear wheel against the operation of these cylinders. Thus, movement of the two oil cylinders 3, 4 connected to the second pressure regulating device 7 is adversely affected by the pressure of high pressure gas, resulting in the foregoing uncomfortable feeling of the driver.

Such a disadvantage can be eliminated by increasing the volume of the high pressure gas chamber to thereby reducing the spring constant of the spring force caused by the high pressure gas. However, in such a construction, a new problem is raised that the first and the second pressure regulating devices 6, 7 are increased in size.

It is an objective of the present invention to provide a vehicle suspension device for four-wheeled vehicles having a suitable suspension characteristic and a compact structure.

According to the present invention said objective is solved by a vehicle suspension device for four-wheeled vehicles with at least four hydraulic dampers, one provided for each wheel, said hydraulic dampers are in communication with each other in paired relation by a first and second pressure regulating device having a high pressure gas chamber means, respectively, wherein the high pressure gas chamber means of the first pressure regulating device is in communication with the high pressure gas chamber means of the second pressure regulating device.

It is an advantage of the present invention to provide a suspension system or device for four-wheeled vehicles capable of avoiding the pressure of high pressure gas adversely affecting the operation of oil cylinders to cause an unnatural movement of the vehicle body, and of effecting size reduction of pressure regulating devices.

Preferred embodiments of the present invention are laid down in the dependent claims.

In the following, the present invention is explained in greater detail with respect to several embodiments thereof in conjunction with the accompanying drawings, wherein:
- Fig. 1: is a structural diagram of a suspension system or device for four-wheeled vehicles according an embodiment;
- Fig. 2: is a sectional view of an oil cylinder and a pressure regulating device;
- Fig. 3: is a structural diagram showing another embodiment of the suspension system or device for four-wheeled vehicles;
- Fig. 4: is a sectional view of the pressure regulating device;
- Fig. 5: is a sectional view showing another embodiment of the pressure regulating device;
- Fig. 6: is a sectional view showing yet another embodiment, with a stopper provided in the cylinder; and
- Fig. 7: is a sectional view showing the structure of a conventional suspension system for four-wheeled vehicles.

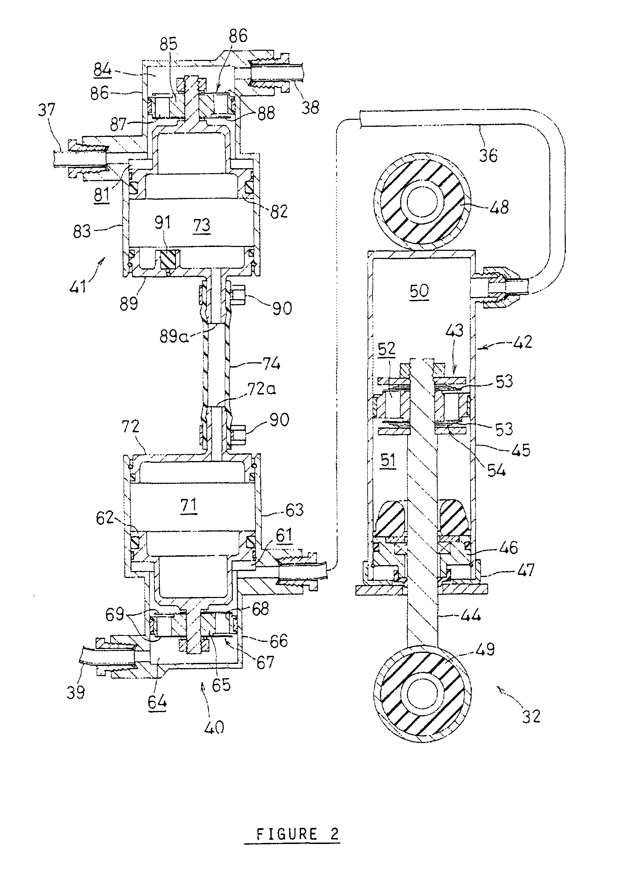

Now, an embodiment of the suspension system for four-wheeled vehicles will be described in detail in reference to Fig. 1 and Fig. 2.

Fig. 1 is a structural diagram of a suspension system for four-wheeled vehicles, and Fig. 2 is a sectional view of an oil cylinder and a pressure regulating device.

In these figures, numeral 31 designates a suspension system or device for four-wheeled vehicles. The suspension system 31 for four-wheeled vehicles comprises oil cylinders (hydraulic dampers) 32-35 provided one for each wheel, a first and a second pressure regulating devices 40, 41 connected to the oil cylinders 32-35 through metal oil pressure pipes 36-39, compression coil suspension springs (not shown) provided one for each wheel, etc. The suspension system 31 for four-wheeled vehicles is shown in Fig. 1 such that the front side of the vehicle is indicated in the upper side of the figure, and the right side of the vehicle in the right side of the figure.

The four oil cylinders 32-35 in this embodiment have the identical construction, and constitute a hydraulic damping system, together with the compression coil suspension springs. In the following description is referred to the construction of an oil cylinder 32 for the right front wheel of these oil cylinders 32-35, and description of the other cylinders 33-35 is omitted.

The oil cylinder 32, as shown in Fig. 2, is arranged such that a piston 43 is fitted in a cylinder 42, and a piston rod 44 coupled to the piston 43 is protruded outwardly from one end (lower end in Fig. 2) of the cylinder 42.

The cylinder 42 is comprised of a cylinder body 45 in the shape of a bottomed cylinder; a cylinder cover 46 for closing the opening of the cylinder body 45 with the piston rod 44 penetrating thereof and supporting the piston rod 44 for axial movement; a cover plate; etc, and filled with working oil.

In this embodiment, the upper end of the cylinder 42 in Fig. 1 and Fig. 2 is connected to a frame member (not shown) of the vehicle body through a cushion rubber 48, and the lower end of the piston rod 44 is connected through a cushion rubber 49 to a member moving with a wheel (not shown).

The piston 43 is of an well known conventional type with a restrictor, and adapted to partition the interior of the cylinder body 45 into an upper oil chamber 50 and a lower oil chamber 51. The piston 43 is formed with a plurality of communication passages 52 for providing communication between the two oil chambers 50, 51, and fitted with leaf springs 53 for opening/closing the openings of the communication passages 52. The leaf springs 53 constitute a restrictor or throttle 54 of the piston 43.

The first pressure regulating device 40 comprises a first pressure regulating cylinder 63 having a first oil chamber 61 in communication with the upper oil chamber 50 of the oil cylinder 32 for the right front wheel through an oil pressure pipe 36 and having a first movable partition wall 62 for changing the volume of the first oil chamber 61; and a second pressure regulating cylinder 66 having a second oil chamber 64 in communication with the upper oil chamber 50 of the oil cylinder 35 for the left rear wheel through an oil pressure pipe 39 and having a second movable partition wall 65 for changing the volume of the second oil chamber 64 in association with the first movable partition wall 62 such that volume changes of the first and the second oil chambers 61, 64 coincide with each other. The first pressure regulating device 40 is fixed to a support bracket (not shown) of the vehicle body.

The first and the second pressure regulating cylinder 63, 66 in this embodiment are formed integrally such that the first and the second movable partition walls 62, 65 are positioned on the same axial line.

The first and the second movable partition walls 62, 65 of the respective pressure regulating cylinders 63, 66 are formed such that effective sectional areas of the first and the second oil chambers 61, 64 coincide with each other, and coupled to each other such that the volumes of the first and the second oil chambers 61, 64 are equal at all times. The hydraulic system of the first oil chamber 61 and that of the second oil chamber 64 are in communication with each other through a restrictor or throttle 67 provided in the second movable partition wall 65. The restrictor 67 is comprised of leaf springs 69 for opening/closing communication passages 68 formed in the movable partition wall 65 for communication between the first and the second oil chambers 61, 64.

The first pressure regulating cylinder 40 is formed with a high pressure gas chamber 71 such that the first movable partition wall 62 constitutes part of the wall. The high pressure gas chamber 71 is formed in the first pressure regulating cylinder 63 by a lid body 72 closing the opening end of the first pressure regulating cylinder 63. The high pressure gas chamber 71 is filled with high pressure gas so that working oil may be pressurized by the high pressure gas. To the lid body 72 is connected a communication pipe 74 for providing communication between the high pressure gas chamber 71 and a high pressure gas chamber 73 of a second pressure regulating device 41 (described later).

The second pressure regulating device 41 has the same construction as the first pressure regulating device 40, and comprises a first pressure regulating cylinder 83 having a first oil chamber 81 in communication with the upper oil chamber 50 of the oil cylinder 33 for the left front wheel through an oil pressure pipe 37 and having a first movable partition wall 82 for changing the volume of the first oil chamber 81; and a second pressure regulating cylinder 86 having a second oil chamber 84 in communication with the upper oil chamber 50 of the oil cylinder 34 for the right rear wheel through an oil pressure pipe 38 and having a second movable partition wall 85 for changing the volume of the second oil chamber 84 in association with the first movable partition wall 82 such that volume changes of the first and the second oil chambers 81, 84 coincide with each other.

The second pressure regulating device 41 is provided, in the second movable partition wall 85, with a restrictor 86 of the same construction as in the first pressure regulating device 40, and formed with the high pressure gas chamber 73. Numeral 87 designates communication passages formed in a second movable partition wall, numeral 88 leaf springs constituting the restrictor or throttle 86, and numeral 89 a lid body for defining the high pressure gas chamber 73. To the lid body 89 is connected the other end of the communication pipe 74. The communication pipe 74 is made of pressure rubber hose, and fastened by bands 90 with connection pipes 72a, 89a of the lid bodies 72, 89 inserted therein.

The component provided in the lid body 89 of Fig. 2 and designated by numeral 91 is a plug member for a gas filling nozzle sticking therein when high pressure gas is filled in the high pressure gas chambers 71, 73.

In the suspension system or device 31 for four-wheeled vehicles as described above, damping force becomes larger during rolling or pitching, and damping force becomes smaller during bouncing or when the front wheels and the rear wheels move in twisted relation as viewed from the front of the vehicle.

As an example of damping force becoming larger, the operation of the system during right turn of the vehicle will be described. In such a running form, the two oil cylinders 33, 35 on the left side are compressed, and the two oil cylinders 32, 34 on the right side are extended.

At this time, working oil is supplied to the first and the second pressure regulating devices 40, 41 from the oil cylinders 33, 35 on the compression stroke, and flows out to the oil cylinders 32, 34 on the extension stroke. That is, in the first pressure regulation device 40, working oil flows from the second oil chamber 64 to the first oil chamber 61 through the restrictor 67, and in the second pressure regulating device 41, working oil flows from the first oil chamber 81 to the second oil chamber 84 through the restrictor 86. Therefore, damping force caused by the working oil passing through the restrictors or throttles 54 of the respective oil cylinders 32-35 and damping force caused by the working oil passing through the restrictors 67, 86 of the respective pressure regulating devices 40, 41 are exerted. At this time, the first and the second movable partition walls 62, 65, 82, 85 of the two pressure regulating devices 40, 41 are hardly moved.

As an example of damping force becoming smaller, the operation of the system will be described when the front and the rear wheels move in twisted relation as viewed from the front of the vehicle body. For example, a running form is taken in which the oil cylinder 32 for the right front wheel and the oil cylinder 35 for the left rear wheel are extended and the oil cylinder 33 for the left front wheel and the oil cylinder 34 for the right rear wheel are compressed, in the first pressure regulating device 40, working oil flows out from the first and the second oil chambers 61, 64, and in the second pressure regulating device 41, working oil flows into the first and the second oil chambers 81, 84. At this time, the first and the second movable partition walls 62, 65 of the first pressure regulating device 40 move downward in Fig. 1, and the first and the second movable partition walls 82, 85 of the second pressure regulating device 41 move upward in Fig. 1. That is, the amount of working oil passing through the restrictors 67, 86 of the first and the second pressure regulating devices 40, 41 is decreased compared with that during rolling or pitching as described above. As a result, damping force caused by the pressure regulating devices 40, 41 is lowered compared with that during rolling or pitching.

The direction of movement of the first and second movable partition walls 62, 65 of the first pressure regulating device 40 is a direction that increases the volume of the high pressure gas chamber 71, and the direction of movement of the first and the second movable partition walls 82, 85 of the second pressure regulating device 41 is a direction that compresses the high pressure gas chamber 73. In the suspension system 31 for four-wheeled vehicles, the high pressure gas chambers 71, 73 are brought into communication with each other by the communication pipe 74, so that high pressure gas flows from the high pressure gas chamber 73 on the compression stroke into the high pressure gas chamber 71 of the first pressure regulating device 40 through the communication pipe 74.

Therefore, the force (pressure of high pressure gas) is decreased which hinders the operation of the oil cylinders 33, 34 connected to the second pressure regulating device 41 whose high pressure gas chamber 73 is compressed, resulting in a smooth movement of the two oil cylinders 33, 34. At this time, pressures in the high pressure gas chamber 71 and the high pressure gas chamber 73 are approximately equal, and spring force caused by high pressure gas is exerted approximately uniformly on the four oil cylinders 32-35, so that the spring force hardly affects the vehicle body. In addition, spring force caused by high pressure gas and exerted on the oil cylinders 32-35 is larger compared with a conventional system with separated high pressure gas chambers, so that the piston rods 44, 45 in the oil cylinders 32-35 on the extension stroke can be extended easily.

Further, the substantial volume of the high pressure gas chambers 71, 73 is doubled compared with a conventional system, so that size reduction of the pressure regulating devices 40, 41 can be effected, as well as reduction of the spring constant of the spring force caused by high pressure gas.

As shown in this embodiment, a communication pipe is connected to the lid body of the first pressure regulating device 40 and the lid body of the second pressure regulating device 41, so that the moving range (volume of the high pressure gas chamber) of the movable partition wall defining the high pressure gas chamber and the oil chamber can be increased compared with a system in which the communication pipes are connected to the cylinders. Thus, the spring constant of the spring force caused by high pressure gas can be decreased further.

### Second Embodiment

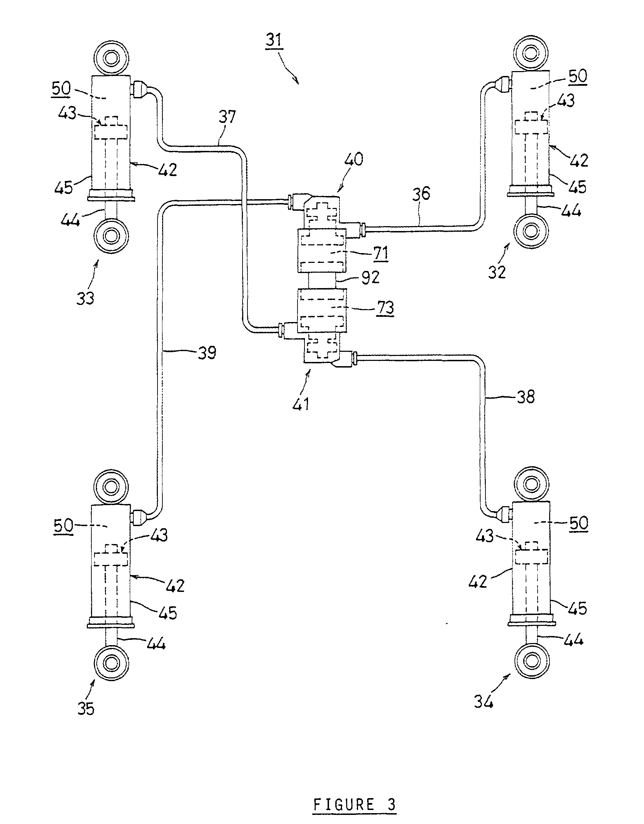

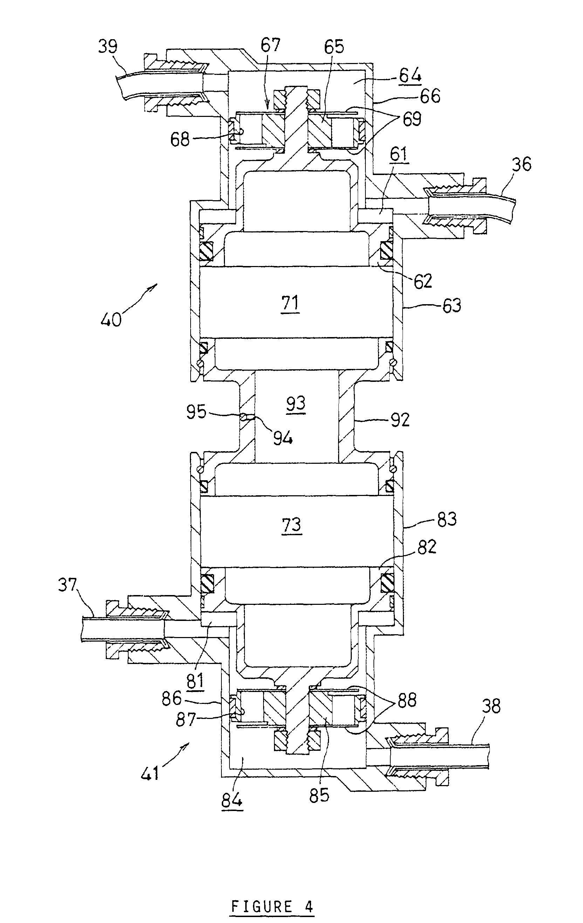

High pressure gas chambers of the two pressure regulating devices may be brought into communication by the lid body as shown in Fig. 3 and Fig. 4.

Fig. 3 is a structural diagram showing another embodiment of the suspension system for four-wheeled vehicles, and Fig. 4 is a sectional view of the pressure regulating device. In these figures, like or equivalent parts as illustrated in Fig. 1 and Fig. 2 are designated by like reference numerals and detailed description is omitted.

The first and the second pressure regulating devices 40, 41 shown in Fig. 3 and Fig. 4 are connected to each other through a lid body 92 forming the high pressure gas chambers 71, 73. Specifically, the lid bodies of the two pressure regulating devices 40, 41 are formed integral with each other into one lid body 92, inside which is formed a communication passage 93 for providing communication between the high pressure gas chamber 71 of the first pressure regulating device 40 and the high pressure gas chamber 73 of the second pressure regulating device 41. High pressure gas is filled by a gas filling nozzle (not shown) being inserted into the communication passage 93 at a through hole 94 provided in the lid body 92. The through hole 94 is closed by a plug member 95 being press fitted therein from the outside after gas-filling.

As a result of the lid body 92 connecting the two pressure regulating devices 40, 41, the two pressure regulating devices 40, 41 can be connected to each other by one lid body 92, so that the number of parts can be decrease compared with the first embodiment in which high pressure gas chambers 71, 73 of the two pressure regulating devices 40, 41 are connected to each other by the communication pipe 74.

### Third Embodiment

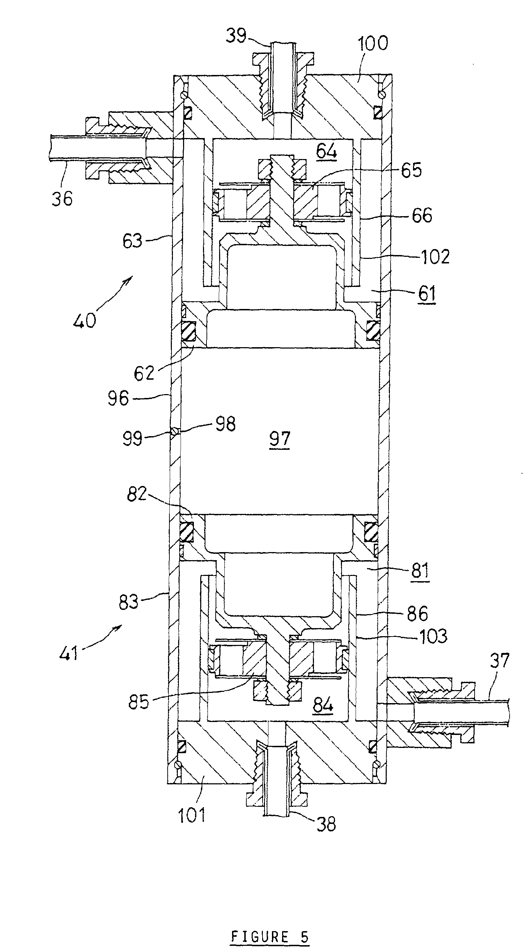

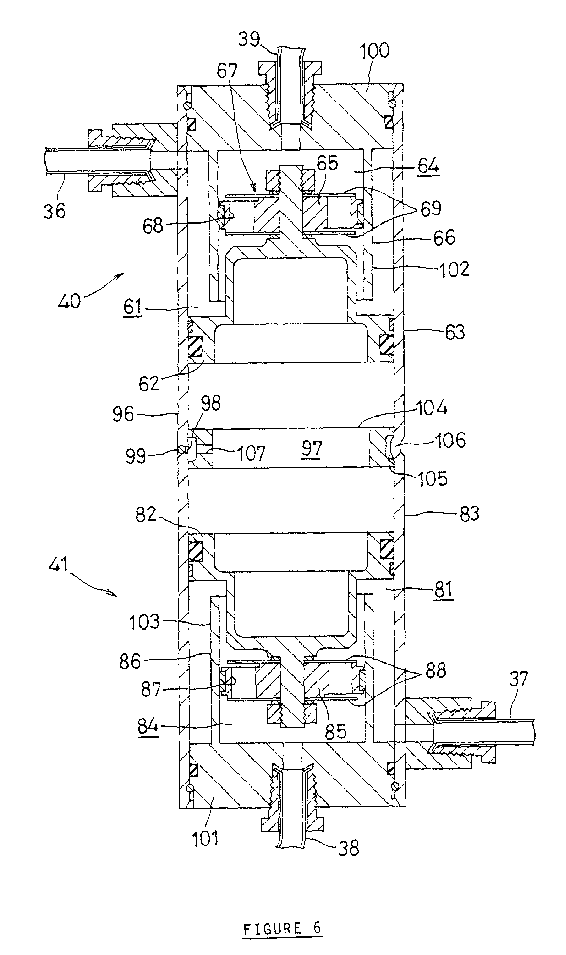

A construction shown in Fig. 5 and Fig. 6 may be adopted for connection of the two pressure regulating devices.

Fig. 5 is a sectional view showing another embodiment of the pressure regulating device, and Fig. 6 is a sectional view showing yet another embodiment, with a stopper provided in the cylinder. In these figures, like or equivalent parts as illustrated in Fig. 1 and Fig. 2 are designated by like reference numerals and detailed description is omitted.

In the first and the second pressure regulating devices 40, 41 shown in Fig. 5, the first and the second pressure regulating cylinders 63, 83 are formed integral with each other. Specifically, to one end of one outer cylinder designated by numeral 96 in Fig. 5 is inserted the first movable partition wall 62 of the first pressure regulating device 40, and to the other end thereof the first movable partition wall 82 of the second pressure regulating device 41. High pressure gas is filled in a space between the first movable partition walls of the two pressure regulating devices 40, 41. That is, inside the outer cylinder 96 and between the first and the second pressure regulating devices 40, 41 is formed a high pressure gas chamber 97. High pressure gas is filled by a gas filling nozzle (not shown) being inserted into the outer cylinder 96 at a through hole 98 provided in the outer cylinder 96. The through hole 98 is closed by a plug member 99 being press fitted therein after gas-filling.

In addition, a first and a second cylinder covers 100, 101 for closing the opposite ends of the outer cylinder 96 are formed, integrally, with inner cylinders 102, 103 constituting the second pressure regulating cylinders 66, 86 of the two pressure regulating devices 40, 41. To the inner cylinders 102, 103 are inserted the second movable partition walls 65, 85 of the two pressure regulating devices 40, 41, and inside the inner cylinders 102, 103 are formed the second oil chambers 64, 84. The second oil chamber 64, 84 are in communication with the oil pressure pipes 38, 39 connected to the cylinder covers 100, 101. Further, between the inner cylinders 102, 103 and the outer cylinder 96 are formed the first oil chambers 61, 81, which are in communication with the oil pressure pipes 36, 37 connected to the outer cylinder 96.

The first pressure regulating device 40 and the second pressure regulating device 41 shown in Fig. 6 have the same construction as those shown in Fig. 5, except that a stopper 104 is provided in the outer cylinder 96.

The stopper 104 is used for restricting the movement of the first and the second movable partition walls 62, 82, having an annular shape and fitted in the outer cylinder 96 axially centrally thereof. Fitting position of the stopper 104 is set such that with the first movable partition walls 62, 82 coming into contact with the stopper 104, the second movable partition walls 65, 85 are fitted in the inner cylinders 102, 103 at the opening ends thereof.

The stopper 104 is secured to the outer cylinder 96 in a way such that the outside circumferential portion of the outer cylinder 96 is partially dented to form an inwardly raised portion, with the stopper 104 fitted therein at the middle thereof, and the inwardly raised portion is engaged with a recessed groove 105 in the outside circumferential surface of the stopper. The inwardly raised portion is designated by numeral 106.

In this embodiment, the stopper 104 is disposed at the same position as the gas filling through hole 98 in the outer cylinder 96, and the stopper 104 is formed with a communication hole 107 so that a gas may be injected.

As a result of the first and the second pressure regulating devices 40, 41 being formed integrally as shown in Fig. 5 and Fig. 6, lid bodies can be eliminated compared with a system in which the pressure regulating cylinders 63, 83 of the two pressure regulating devices 40, 41 are provided with lid bodies to form the high pressure gas chambers, thereby decreasing the number of parts further.

Although in the foregoing embodiments, examples are shown in which cylinders 42 of four oil cylinders 32-35 are coupled to body side members, respectively, and piston rods 44 are also coupled to wheel side members, respectively, the cylinders 42 may be connected to the wheel side members and the piston rods 44 to the body side members. In this construction, one ends of the oil pressure pipes 36-39 on the cylinder 42 side are formed of rubber oil hoses so that said one ends may follow the cylinders 42 when the cylinders 42 move relative to the vehicle body.

Further, although the suspension systems 31 for four-wheeled vehicles in the foregoing embodiments are shown in Fig. 1 and Fig. 3 such that the front side of the vehicle is indicated in the lower sides of the figures, and the rear side of the vehicle in the upper sides of the figures, the rear side of the vehicle may be indicated in the upper sides of the figures and the front side of the vehicle in the lower sides of the figures.

Furthermore, although the first and the second pressure regulating devices 40, 41 are arranged such that effective cross-sectional areas of the first oil chambers 61, 81 and the second oil chambers 64, 84 coincide with each other and volume changes of the first oil chambers 61, 81 and the second oil chambers 64, 84 also coincide with each other, these conditions may be changed as appropriate. That is, as a result of the volumes of the first oil chambers and the second oil chambers being set to be different from each other, as well as volume changes of these two oil chambers, the diameter may be changed between the oil cylinders 32, 33 for front wheels and the oil cylinders 34, 35 for rear wheels of the four cylinders 32-35, or the lever ratio of the suspension system may be changed between the front and the rear wheel sides. Thus, the suspension system may be arranged such that it is adapted, for example, to the weight distribution separately for the front and the rear wheels.

In the suspension system or device for four-wheeled vehicles according to the embodiments as described above, a high pressure gas chamber of a pressure regulating device connecting two oil cylinders, provided in paired relation to the vehicle body, to each other, and a high pressure gas chamber of a pressure regulating device connecting the other two oil cylinders to each other are in communication with each other.

Accordingly, high pressure gas flows from a high pressure chamber on the compression stroke into the other high pressure gas chamber, so that the force is decreased which hinders the operation of the oil cylinder connected to the pressure regulating device whose high pressure gas chamber is compressed. In addition, the volume of the high pressure gas chamber is doubled compared with that of a conventional chamber, so that size reduction of the pressure regulating device can be effected, as well as reduction in the spring constant of the spring force caused by high pressure gas.

Therefore, the pressure of high pressure gas doesn't affect the operation of the oil cylinder adversely, which provides a natural movement of the vehicle body, avoiding an uncomfortable feeling of the driver. In addition, the volume of the high pressure chamber is doubled compared with a conventional chamber, and the spring constant of the spring force caused by high pressure gas can be decreased, thereby effecting size reduction of the pressure regulating devices.

In the suspension system or device for four-wheeled vehicles according to an embodiment as described above, the high pressure gas chamber is defined in a pressure regulating device by a lid body provided at one end of a cylinder forming the pressure regulating device, and a communication pipe for providing communication between the high pressure gas chambers of the two pressure regulating devices is connected to said lid body.

Accordingly, a communication pipe can be connected to the end of the cylinder of the pressure regulating device, so that the moving range (volume of the high gas chamber) of a movable partition wall defining the high pressure gas chamber and the oil chamber can be increased compared with a system in which the communication pipe is connected to the cylinder. Furthermore, the moving range (volume of the high pressure gas chamber) of a movable partition wall defining the high pressure gas chamber and an oil chamber can be increased, so that the spring constant of the spring force caused by high pressure gas can be decreased further. Thus, a riding feeling of the vehicle equipped with a suspension system according to this invention can be improved.

In the suspension system or device for four-wheeled vehicles according to an embodiment as described above, said high pressure gas chamber is defined in a pressure regulating device by a lid body provided at one end of a cylinder forming the pressure regulating device, lid bodies of the two pressure regulating devices are formed integral with each other into one lid body, and inside said one lid body is formed a communication passage for providing communication between the high pressure gas chamber in one pressure regulating device and that in the other pressure regulating device.

Accordingly, high pressure gas chambers of the two pressure regulating devices can be connected by one lid body, so that the number of parts can be decreased compared with a system in which high pressure chambers of the two pressure regulating devices are connected to each other by a communication pipe. Thus, manufacturing costs can be reduced.

In the suspension system or device for four-wheeled vehicles according to an embodiment as described above, a cylinder forming one pressure regulating device and a cylinder forming the other pressure regulating device are formed integrally, and a space inside the cylinders and formed between one and the other pressure regulating devices constitutes a high pressure gas chamber of the two pressure regulating devices.

Accordingly, lid bodies can be eliminated compared with a system in which lid bodies are provided on cylinders of pressure regulating devices to form high pressure gas chambers, so that the number of parts can be further decreased, thereby effecting a further cost reduction.

The embodiments described above teaches a vehicle suspension device for four-wheeled vehicles with at least four hydraulic dampers 32,33,34,35 one (of said four hydraulic dampers) provided for each wheel. Thus, each of the wheels is provided with at least one hydraulic damper. Said hydraulic dampers 32,33,34,35 are in communication with each other in paired relation by a first and second pressure regulating device 40,41 having a high pressure gas chamber means 71,73,97, respectively, wherein the high pressure gas chamber means 71,97 of the first pressure regulating device 40 is in communication with the high pressure gas chamber means 73,97 of the second pressure regulating device 41.

According to embodiments described above, the high pressure gas chamber means comprises a first gas chamber 71 of the first pressure regulating device 40 and a second gas chamber 73 of the second pressure regulating device 40, wherein a communication passage means 74,93 is connecting said first and second gas chamber 71,73. According to an embodiment, said first gas chamber 71 is defined by a lid body 72 provided at one end of the first pressure regulating device 40 and said second gas chamber 73 is defined by a lid body 89 provided at one end of the second pressure regulating device 40. Said communication passage means comprises a communication pipe 74 connected to said lid bodies 72,89, respectively, for providing communication between the gas chambers 71,73 of the pressure regulating devices 40,41.

According to a further embodiment described above, said first and second gas chambers 71,73 is defined by a integral lid body 92 provided at respective ends of the first and the second pressure regulating devices 40,41, wherein said communication passage means comprises a communication passage 93 formed in said lid body 92 for providing communication between the gas chambers 71,73 of the pressure regulating devices 40,41. Said integral lid body 92 is provided with a through hole 94 closeable by a plug member 95 for filling said first and second gas chambers 71,73.

According to a further embodiment described above, the high pressure gas chamber means comprises a gas chamber 97 common for the first and the second pressure regulating devices 41,40. The first and the second pressure regulating devices 41,40 comprise a common cylinder 96 defining said gas chamber 97. Said common cylinder 96 is provided with a through hole 98 closeable by a plug member 99 for filling said gas chamber 97. Said gas chamber 97 is defined by said common cylinder 96, a first movable wall 62 of the first pressure regulating device 40 and a first movable wall 82 of the second pressure regulating device 41 inserted into said common cylinder 96, respectively. A stopper 104 is provided within said common cylinder 96 between said first movable wall 62 of the first pressure regulating device 40 and said first movable wall 82 of the second pressure regulating device 41.

According to the embodiments described above, each of the first and the second pressure regulating devices 40,41 comprise a first oil chamber 61 with a first moveable wall 62 and a second oil chamber 64 with a second moveable wall 65. Said first moveable wall 62 and said second moveable wall 65 are connected to each other, each of said paired hydraulic dampers is connected to the first and the second oil chambers 61,64, respectively, of the respective pressure regulating device 40,41. Said first and second oil chambers 61,64 are connected with each other, and said first moveable wall 62 is part of said high pressure gas chamber means 71,73,97.

## Claims

1. Vehicle suspension device for four-wheeled vehicles with at least four hydraulic dampers (32,33,34,35) one provided for each wheel, said hydraulic dampers (32,33,34,35) are in communication with each other in paired relation by a first and second pressure regulating device (40,41) having a high pressure gas chamber means (71,73,97), respectively, wherein the high pressure gas chamber means (71,97) of the first pressure regulating device (40) is in communication with the high pressure gas chamber means (73,97) of the second pressure regulating device (41).

2. Vehicle suspension device according to claim 1, **characterized in that** the high pressure gas chamber means comprises a first gas chamber (71) of the first pressure regulating device (40) and a second gas chamber (73) of the second pressure regulating device (40), wherein a communication passage means (74,93) is connecting said first and second gas chamber (71,73).

3. Vehicle suspension device according to claim 2, **characterized in that** said first gas chamber (71) is defined by a lid body (72) provided at one end of the first pressure regulating device (40) and said second gas chamber (73) is defined by a lid body (89) provided at one end of the second pressure regulating device (40), wherein said communication passage means comprises a communication pipe (74) connected to said lid bodies (72,89), respectively, for providing communication between the gas chambers (71,73) of the pressure regulating devices (40,41).

4. Vehicle suspension device according to claim 2, **characterized in that** said first and second gas chambers (71,73) is defined by a integral lid body (92) provided at respective ends of the first and the second pressure regulating devices (40,41), wherein said communication passage means comprises a communication passage (93) formed in said lid body (92) for providing communication between the gas chambers (71,73) of the pressure regulating devices (40,41).

5. Vehicle suspension device according to claim 4, **characterized in that** said integral lid body (92) is provided with a through hole (94) closeable by a plug member (95) for filling said first and second gas chambers (71,73).

6. Vehicle suspension device according to claim 1, **characterized in that** the high pressure gas chamber means comprises a gas chamber (97) common for the first and the second pressure regulating devices (41,40).

7. Vehicle suspension device according to claim 6, **characterized in that** the first and the second pressure regulating devices (41,40) comprise a common cylinder (96) defining said gas chamber (97).

8. Vehicle suspension device according to claim 7, **characterized in that** said common cylinder (96) is provided with a through hole (98) closeable by a plug member (99) for filling said gas chamber (97).

9. Vehicle suspension device according to claim7 or 8 , **characterized in that** said gas chamber (97) is defined by said common cylinder (96), a first movable wall (62) of the first pressure regulating device (40) and a first movable wall (82) of the second pressure regulating device (41) inserted into said common cylinder (96), respectively, wherein a stopper (104) is provided within said common cylinder (96) between said first movable wall (62) of the first pressure regulating device (40) and said first movable wall (82) of the second pressure regulating device (41).

10. Vehicle suspension device according to at least one of the claims 1 to 9, **characterized in that** each of the first and the second pressure regulating devices (40,41) comprise a first oil chamber (61) with a first moveable wall (62) and a second oil chamber (64) with a second moveable wall (65), said first moveable wall (62) and said second moveable wall (65) are connected to each other, each of said paired hydraulic dampers is connected to the first and the second oil chambers (61,64), respectively, of the respective pressure regulating device (40,41), said first and second oil chambers (61,64) are connected with each other, and said first moveable wall (62) is part of said high pressure gas chamber means (71,73,97).
